# EUROPÄISCHE PATENTSCHRIFT

(11) **EP 2 001 914 B1**
(45) Veröffentlichungstag und Bekanntmachung des Hinweises auf die Patenterteilung: **07.04.2010**
(21) Anmeldenummer: 07712204.2
(22) Anmeldetag: 12.02.2007
(51) Int. Cl.: C08F 6/02

(54) **ENTFERNUNG VON ÜBERGANGSMETALLEN AUS ATRP-PRODUKTEN MITTELS ZUGABE VON MERCAPTANEN**
REMOVAL OF TRANSITION METALLS FROM ATRP PRODUCTS BY MEANS OF ADDITION OF MERCAPTANES
EXTRACTION DES METAUX DE TRANSITION DES PRODUITS OBTENUS PAR ATRP PAR AJOUT DE MERCAPTANS

(30) Priorität: 03.04.2006 DE 102006015846
(43) Veröffentlichungstag der Anmeldung: 17.12.2008
(73) Patentinhaber: Evonik Röhm GmbH, 64293 Darmstadt (DE)
(72) Erfinder: BALK, Sven, 60594 Frankfurt (DE); LÖHDEN, Gerd, 45316 Essen (DE); MIESS, Christine, 63796 Kahl (DE); TRÖMER, Christine, 63546 Hammersbach (DE); MÄRZ, Monika, 63755 Alzenau (DE)
(86) Internationale Anmeldenummer: PCT/EP2007/051304
(87) Internationale Veröffentlichungsnummer: WO 2007/115848

(56) Entgegenhaltungen:
- EP-A- 1 607 415
- EP-A1- 1 028 128
- WO-A-01/40317
- GB-A- 2 085 457
- US-A- 3 531 448
- US-A- 4 098 991
- US-A- 5 281 696

## Beschreibung

### Gebiet der Erfindung

Die vorliegende Erfindung betrifft ein Verfahren zur Entfernung von Übergangsmetallen aus Polymerlösungen. Im Speziellen handelt es sich um die Entfernung von Übergangsmetallkomplexen mit einem Gehalt von bis zu 1000 ppm. Im ganz Speziellen handelt es sich um die Entfernung von Übergangsmetallkomplexen, die zumeist Kupfer enthalten, aus Polymerlösungen nach einer abgeschlossenen Atom Transfer Radikal Polymerisation.

Die Atom Transfer Radikal Polymerisation (im Folgenden kurz ATRP) stellt ein wichtiges Verfahren zur Darstellung einer Vielzahl von Polymeren wie z.B. Polyacrylate, Polymethacrylate oder Polystyrole dar. Mit dieser Art der Polymerisation ist man dem Ziel maßgeschneiderter Polymere ein gutes Stück näher gekommen. Die ATRP-Methode wurde in den 1990-er Jahren maßgeblich von Prof. Matyjaszewski entwickelt (Matyjaszewski et al., J.Am.Chem.Soc., 1995, 117, S.5614; WO 97/18247; Science, 1996, 272, S.866). Die ATRP liefert engverteilte (Homo)Polymere im Molmassenbereich von Mₙ=5.000-120.000 g/mol. Ein besonderer Vorteil dabei ist, dass sowohl das Molekulargewicht als auch die Molekulargewichtsverteilung regelbar sind. Als lebende Polymerisation gestattet sie ferner den gezielten Aufbau von Polymerarchitekturen wie beispielsweise statistische Copolymere oder auch Block-Copolymer-Strukturen. Durch entsprechende Initiatoren sind z.B. zusätzlich ungewöhnliche Block-Copolymere und Sternpolymere zugänglich. Theoretische Grundlagen zum Polymerisationsmechanismus sind unter anderem in Hans Georg Elias, Makromoleküle, Band 1, 6.Auflage, Weinheim 1999, S.344 erläutert.

### Stand der Technik

Die Reinigung von Polymeren bzw. Polymerlösungen ist vielfach umschrieben worden. So können zum Beispiel niedermolekulare Verbindungen aus Lösungen oder auch aus festen Polymeren mittels Extraktionsverfahren entfernt werden. Allgemein beschrieben ist ein solches Verfahren z.B. in WO 02/28916. Um jedoch Übergangsmetallkomplexe fast vollständig - d.h. unter einen Gehalt von 1 ppm - aus einer Polymerlösung zu entfernen, ist eine reine Extraktion ungeeignet. Eine nahezu vollständige Entfernung dieser Verbindungen ist jedoch aus unterschiedlichen Gründen von großer Bedeutung. Zunächst sind Übergangsmetalle insbesondere mit einer koordinierten Ligandensphäre besonders farbige Verbindungen. Eine Färbung des Endproduktes ist jedoch in vielen Anwendungen unerwünscht. Ferner können Übergangsmetalle in zu hohen Konzentrationen Anwendungen in Bezug auf Lebensmittelkontakt oder kosmetische Anwendungen ausschließen. Auch ist eine Verringerung der Produktqualität bei relevanten Konzentrationen durchaus zu erwarten: zum einen können Metallanteile eine Depolymerisation katalysieren und somit die thermische Stabilität des Polymers verringern - zum anderen ist durch Koordination von funktionellen Gruppen des Polymers eine signifikante Erhöhung der Schmelz- bzw. Lösungsviskosität nicht auszuschließen.

Nicht zuletzt können auch die mit dem Übergangsmetall eingebrachten Liganden unerwünschte Nebeneffekte mit sich bringen. Viele dieser stark koordinativen Verbindungen, wie zum Beispiel die in der ATRP verbreiteten di- oder trifunktionellen Amine, wirken in Folgereaktionen wie z.B. einer Hydrosilylierung als Katalysatorgift. So ist nicht nur die Entfernung des Übergangsmetalls an sich von großem Interesse, sondern auch eine möglichst effiziente Reduzierung der Ligandenkonzentration in der Aufarbeitung wichtig. Somit sind Verfahren, die unter einer Zerstörung des Übergangsmetallkomplexes und ausschließliche Entfernung des Metalls ablaufen, für viele Folgereaktionen bzw. Anwendungen nicht ausreichend. Dies gilt insbesondere auch, da viele dieser Liganden geruchs- und farbintensiv sind.

Eine spezielle Form der Extraktion stellt die wässrige flüssig-flüssig-Extraktion aus Polymerlösungen dar. So wird zum Beispiel bei der Synthese von Polyphenylenoxid ein Kupferkatalysator verwendet, der nach der Polymerisation durch wässrige Extraktion aus der Polymerlösung entfernt wird (vgl. Ullmanns Exyclopedia of Industrial Chemistry, 5. Auflage 1992, Bd. 26 a, S. 606 ff). Nachteilig an dieser Methode ist, dass viele polare Polymere als Suspensionsstabilisatoren wirken und verhindern, dass die beiden flüssigen Phasen nicht getrennt werden können. So lassen sich diese Verfahren beispielsweise nicht zur Aufarbeitung von Polymethylmethacrylaten anwenden. Ein weiterer Nachteil ist die nur sehr aufwendige Übertragung eines solchen Verfahrens auf großtechnische Produktionsmaßstäbe.

Im Labormaßstab erfolgt die Abtrennung der Übergangsmetallverbindung - zum Beispiel eines Kupferkatalysators - aus Polymerlösungen zumeist durch Adsorption an Aluminiumoxid und anschließendes Ausfällen des Polymers in geeigneten Fällungsmitteln oder durch direktes Ausfällen ohne Adsorptionsschritt. Als Fällungsmittel eignen sich insbesondere sehr polare Lösungsmittel wie Methanol. Bei entsprechender Ligandensphäre könne aber auch besonders unpolare Fällungsmedien wie Hexan oder Pentan zum Einsatz kommen. Ein derartiges Vorgehen ist jedoch aus unterschiedlichen Gründen nachteilig. Zunächst liegt das Polymer nach der Fällung nicht in einer einheitlichen Form wie zum Beispiel einem Granulat vor. Aus diesem Grund ist die Abtrennung und damit die weitere Aufarbeitung schwierig. Des Weiteren fallen bei dem Fällprozess große Mengen des Fällungsmittels gemischt mit den Lösungsmitteln, den Katalysatorresten und weiteren abzutrennenden Bestandteilen wie Restmonomeren an. Diese Mischungen müssen in Folgeprozessen aufwendig getrennt werden. Insgesamt sind Fällungsprozesse auf eine großtechnische Produktion nicht übertragbar und nur im Labormaßstab sinnvoll anzuwenden.

Darüber hinaus sind Verfahren bekannt bei denen die Abtrennung eines festen Katalysators von der flüssigen polymerhaltigen Lösung erfolgt. Hierbei wird der Katalysator selbst beispielsweise durch Oxidation unlöslich oder er wird vor oder nach der Polymerisation an ein festes Absorptionsmittel oder an ein gequollenes aber unlösliches Harz gebunden. Die flüssige polymerhaltige Phase wird durch Filtration oder Zentrifugation vom unlöslichen Material getrennt. So wird zum Beispiel in CN 121011 ein Verfahren beschrieben, in dem ein Adsorptionsmittel (insbesondere Aktivkohle oder Aluminiumoxid) nach dem ATRP-Prozess in die Polymerlösung gegeben und anschließend durch Filtration abgetrennt wird. Nachteilig ist hierbei, dass eine vollständige Abtrennung nur durch sehr große Mengen an Adsortpionsmittel möglich ist, obwohl der Gehalt an Übergangsmetallkomplexen in der Reaktionsmischung relativ gering ist. Die Verwendung von Aluminiumoxid wird auch in JP 2002 363213 beansprucht. In JP 2005 015577, JP 2004 1449563 und weiteren Schriften werden basische oder saure Silica zum Einsatz gebracht. In JP 2003 096130, JP 2003 327620, JP 2004 155846 und einer Reihe weiterer Patentschriften der Firma Kaneka (bzw. Kanegafuchi) werden saure, basische oder Kombinationen aus Hydrotalciten als Adsorptionsmittel in zumeist mehrstufigen Filtrationsverfahren verwendet. Auch hier werden große Mengen des anorganischen Materials eingesetzt. Weiterhin sind derartige Adsorptionsmittel relativ teuer und müssen sehr aufwendig recycelt werden. Die Unwirtschaftlichkeit kommt insbesondere bei der Verwendung von lonenaustauschermaterialien zum Tragen (vgl. Matyjazewski et al., Macromolecules, 2000, 33(4), S.1476-8).

Dieser beschriebene Effekt liegt auch der in DE 100 15 583 Erfindung, in der ein ATRP-Verfahren in unpolaren Lösungsmitteln beschrieben wird, zugrunde. Der Übergangsmetallkomplex wird während oder nach der Reaktion durch Oxidation unlöslich und kann abfiltriert werden. Derartige Verfahren eignen sich jedoch nur zur Herstellung von relativ unpolaren Polymeren. Werden polare Polymere hergestellt, beispielsweise Polymethylmethacrylate, so sind die Polymere in dem Lösungsmittel unlöslich. Damit ist dieses Vorgehen nur sehr eingeschränkt, in sehr speziellen Polymerisationen anwendbar. Der durch dieses Vorgehen verfügbare Produktbereich lässt sich mittels gezieltem "Design" der Liganden, die unter Aufarbeitungsbedingungen zu einer Unlöslichkeit des Übergangsmetallkomplexes führen, noch erweitern - so zum Beispiel beschrieben in Liou et al., Polym. Prep. (Am. Chem. Soc., Div. Poly. Chem.; 1999, 40(2), S. 380). Analog dazu wird in JP 2005 105265 mit EDTA zusätzlich ein Komplexierungsmittel zur Veränderung der Löslichkeit zugegeben. Nachteilig sind die sehr hohen Preise für die Liganden. Auch ist dem Fachmann leicht ersichtlich, dass sämtliche auf rein verfahrensbegleitende Fällung basierenden Verfahren ohne Zugabe eines Fällungsmittels nur zu einer unvollständigen Katalysatorentfemung führen können. Die meisten Verfahren des Standes der Technik sind daher mehrstufige Verfahren unter Zugabe von Hilfsstoffen, welche zumeist als Adsorptionsmittel fungieren. Entsprechende nachteilige Aufarbeitungen unter Phasenseparation finden sich auch in JP 2002 356510.

In solchen mehrstufigen Prozessen wird oft eine Zentrifugation eingesetzt. Dieses Verfahren ist selbstverständlich nicht wirtschaftlich auf großtechnische Produktionsvoiumina erweiterbar. Beschrieben werden solche Stufen in EP 1 132 4.10 oder JP 2003 119219.

Darüber hinaus gibt es auch Beschreibungen elektrochemischer Verfahren (vgl. Nasser-Eddine et al., Macrom. Mat. Eng., 2004, 289(2), S.204-7), die jedoch allein aus sicherheitstechnischen Erwägungen bei großvolumigen Prozessen keine Anwendung finden können.

Des Weiteren sind Methoden bekannt, bei denen die Polymerisation mit einem bereits an einem Feststoff oder Gel immobilisierten Katalysator durchgeführt wird (vgl. z.B. WO 00/062803; Brittain et al. Polymer. Prepr. (Am. Chem. Soc., Div. Poly. Chem.; 2002, 43(2), S.275). Nachteilig an dieser Methode sind insbesondere die hohen Kosten, die durch die Katalysator-Präpäration entstehen. Darüber hinaus sind derartige Reaktionen aufgrund des heterogenen Charakters und der damit verbundenen schlechten Erreichbarkeit des Katalysatorzentrums durch die Kettenenden relativ langsam.

Entsprechendes gilt für das in WO 01/84424 beschriebene Verfahren, bei dem der Initiator an einen festen Träger gebunden wird. Nach der Polymerisation hängen die erzeugten Polymerketten an diesen festen Trägem und werden nach der Abtrennung der Katalysatorlösung abgespalten. Hauptnachteil dieses Verfahrens sind die vielen unwirtschaftlichen Prozessschritte, die zur eigentlichen Polymerisation hinzukommen. Darüber hinaus kommt auch dieser Prozess nicht ohne Filtration und Fällung aus.

In EP 1 607 415 wird die Fällung von Platinmetallkomplexen, wie sie in der Olfinpolymerisation eingesetzt werden, mit OH-funktionellen Verbindungen basiert auf einer Hydrolyse des feuchtigkeitsempfindlichen Metallkomplexes beschrieben. Nicht geeignet ist eine solche Fällung beispielsweise für die die Fällung von Kupferkomplexen aus ATRP-Lösungen. Die ATRP kann sogar in wässrigen System durchgeführt werden.
In GB 2 085 457 wird die Fällung von Katalysatorrückstäriden mit Schwefelsäure beschrieben. Die Fällung mit Schwefelsäure erfolgt durch Oxidation des Metalls. Die aus einer Oxidation resultierende Fällung ist in der Regel unvollständig.

In WO 98/40415 wird Natriumsulfid für die Fällung von Kupferkatalysatoren aus ATRP-Lösungen vorgeschlagen. Bei Natriumsulfid handelt es sich um eine ionische, rein anorganische Verbindung, die zur Verwendung in organischen Lösungsmitteln ungeeignet ist. Ferner ist Natriumsulfid für die Fällung von komplexierten Kupfer-(1)-Reagenzien, insbesondere aus organischen Lösungsmitteln, nur schlecht geeignet.

### Aufgabe

Aufgabe der vorliegenden Erfindung ist es insbesondere in Anbetracht des Standes der Technik, ein großtechnisch realisierbares Verfahren zur Abtrennung von Übergangsmetallkomplexen aus Polymerlösungen zur Verfügung zu stellen. Zugleich soll das neue Verfahren kostengünstig und schnell durchführbar sein. Darüber hinaus war es Aufgabe der vorliegenden Erfindung, ein Verfahren zur Verfügung zu stellen, das ohne aufwendige Umbauten auf bekannten, zur Lösungspolymerisation geeigneten Anlagen implementiert werden kann. Eine weitere Aufgabe war es, bereits nach einem Filtrationsschritt besonders niedrige Restkonzentrationen der Übergangsmetallkomplexverbindungen von unter 5 ppm zu realisieren.

Insbesondere war es Aufgabe der vorliegenden Erfindung, Übergangsmetallreste nach Polymerisattionsabbruch aus Lösungen einer ATRP-Polymerisation zu entfernen. Damit einhergehend bestand die Aufgabe, dass die Eigenschaften des Polymers während der Metallentfernung in keiner Weise verändert werden und der Ausbeuteverlust als äußerst gering beschrieben werden kann. Mehr detailliert sollte vor allem die zumeist erreichte enge Molekulargewichtsverteilung der ATRP-Produkte während des erfindungsgemäßen Prozesses unverändert bleiben.

Ein weiterer Gesichtspunkt der vorliegenden Erfindung war, dass sie unabhängig von Polymereigenschaften wie Funktionalitäten, Glastemperatur, Struktur, Molekulargewicht, Verzweigung oder anderen Variationsmöglichkeiten anwendbar sein sollte und diese Eigenschaften während des Prozesses ebenfalls nicht verändert werden.

Eine weitere Aufgabe war es, mit den Übergangsmetallresten auch eventuell freiwerdende oder ohnehin im Überschuss vorliegende Liganden aus der Polymerlösung zu entfernen.

### Lösung

Gelöst wurde die Aufgabe indem die Übergangsmetallverbindung mittels Zusatz eines geeigneten Fällungsmittels gefällt und anschließend mittels Filtration abgetrennt wird

Der Abbruch der Reaktion erfolgt in dem beschriebenen ATRP-Verfahren zumeist durch Oxidation des Übergangmetalls. Dies kann ganz einfach mittels Einleiten von Luftsauerstoff oder durch Zugabe von Schwefelsäure erfolgen. Im Falle von Kupfer als Katalysator fällt bei diesem bereits etablierten Vorgehen oftmals bereits ein Teil des Metallkomplexes aus. Dieser Anteil ist jedoch zur Weiterverarbeitung des Polymers nicht ausreichend. Gelöst wurde die Aufgabe der optimierten Katalysatorentfemung durch Zugabe von Schwefelverbindungen wie z.B. Mercaptanen als Fällungsmittel.

Bestandteil dieser Erfindung ist darüber hinaus, dass man mittels einfacher Modifikationen in der Filtration die Restschwefelanteile zusätzlich ganz einfach, nahezu vollständig entfernen kann. Auf diese Weise erhält man Produkte, die keinen unangenehmen, schwefelverbindungsbedingten Geruch aufweisen.

Überraschend wurde gefunden, dass durch Zugabe geeigneter Schwefelverbindungen eine nahezu vollständige Fällung der Kupfersalze aus der Polymerlösung erfolgt. Die ausgefällten Salze lassen sich weiterhin sehr einfach mittels Filtration entfernen.

Ein großer Vorzug der vorliegenden Erfindung ist die effiziente Entfernung der Übergangsmetallkomplexe aus der Lösung. Durch Anwendung des erfindungsgemäßen Verfahrens ist es möglich, den Übergangsmetallgehalt mit einer Filtration um mindestens 80 Gew%, bevorzugt um mindestens 95 Gew% und ganz besonders bevorzugt um mindestens 99 Gew% zu reduzieren. In besonderen Ausführungen ist es sogar durch Anwendung des erfindungsgemäßen Verfahrens möglich, den Übergangsmetallgehalt um mehr als 99,9 Gew% zu reduzieren.

Weiterhin überraschend wurde gefunden, dass entsprechende Schwefelverbindungen bezogen auf die Übergangsmetallvebindung nur in einem minimalen Überschuss von 1,5 Äquivalenten, bevorzugt 1,2 Äquivalenten und besonders bevorzugt unter 1,1 Äquivalenten eingesetzt werden muss. Dieser minimale Überschuss führt zu einem an sich nur sehr geringen Restschwefelgehalt in der Polymerlösung.

Zur Fällung können eine Vielzahl verschiedener organischer Schwefelverbindungen und deren Mischungen eingesetzt werden.

Bei den erfindungsgemäßen Fällungsmitteln handelt es sich um Verbindungen, die Schwefel in organisch gebundener Form enthalten. Diese zur Fällung von Übergangsmetallionen bzw. Übergangsmetallkomplexen eingesetzten schwefelhaltigen Verbindungen weisen SH-Gruppen auf. Es handelt sich um Mercaptane und / oder andere funktionalisierte oder auch unfunktionalisierte Verbindungen, die eine oder mehrere Thiolgruppen aufweisen. Dabei kann es sich um organische Verbindungen wie Thioglykolessigsäure, Mercaptopropionsäure, Mercaptoethanol, Mercaptopropanol, Mercaptobutanol, Mercaptohexanol, Octylthioglykolat, Methylmercaptan, Ethylmercaptan, Butylmercaptan, Dodecylmercaptan, Isooctylmercaptan und tert-Dodecylmercaptan handeln. Bei den meisten aufgeführten Beispielen handelt es sich um kommerziell leicht verfügbare, in der freiradikalischen Polymerisation als Regler eingesetzte Verbindungen. Die vorliegende Erfindung lässt sich jedoch nicht auf diese Verbindungen einschränken. Entscheidend ist vielmehr, dass das eingesetzte Fällungsmittel eine -SH-Gruppe aufweist.

Insbesondere sehr überraschend wurde gefunden, dass als besagte Schwefelverbindungen Verbindungen verwendet werden können, die aus der freiradikalischen Polymerisation als Regler bekannt sind. Vorteil dieser Verbindungen ist ihre leichte Verfügbarkeit, ihr niedriger Preis und die breite Variationsmöglichkeit, die eine optimale Anpassung der Fällungsreagenzien an das jeweilige Polymerisationssystem ermöglichen. Regler werden in der freiradikalischen Polymerisation eingesetzt, um das Molekulargewicht der Polymerisate zu steuern.

In der freiradikalischen Polymerisation wird die Menge an Reglern, bezogen auf die zu polymerisierenden Monomeren, zumeist mit 0,05 Gew-% bis 5 Gew-%, angegeben. In der vorliegenden Erfindung wird die Menge der eingesetzten Schwefelverbindung nicht auf die Monomere, sondern auf die Konzentration der Übergangsmetallverbindung in der Polymerlösung bezogen. Die erfindungsgemäßen schwefelhaltigen Fällungsmittel werden in diesem Sinne in 1,5 molaren Äquivalenten, bevorzugt 1,2 molaren Äquivalenten, besonders bevorzugt unter 1,1 molaren Äquivalenten und ganz besonders bevorzugt unter 1,05 molaren Äquivalenten eingesetzt.

Es ist dem Fachmann leicht ersichtlich, dass die beschriebenen Mercaptane bei einer Zugabe zur Polymerlösung nach Abbruch der Polymerisation keinen Einfluss auf die Polymere haben können. Dies gilt insbesondere für die Molekulargewichtsverteilungen, das Molekulargewicht, Funktionalitäten, Glastemperatur, bzw. Schmelztemperatur bei teilkristallinen Polymeren und Strukturen wie Verzweigungen oder Blockstrukturen.

Weiterhin ist dem Fachmann leicht ersichtlich, dass ein entsprechendes Verfahren, welches apparativ ausschließlich auf einer Filtration der Polymerlösung beruht leicht in einen großtechnischen Prozess ohne größere Umbauten an bestehenden Lösungspolymerisationsanlagen implementierbar ist.

Ein weiterer Vorteil der vorliegenden Erfindung liegt darin, dass durch die Reduzierung auf einen oder maximal zwei Filtrationsschritte eine im Vergleich zu vielen etablierten Systemen sehr schnelle Aufarbeitung der Polymerlösung erfolgen kann.

Zudem erfolgt die Fällung und anschließende Filtration bei einer Temperatur im Bereich zwischen 0°C und 120°C, Verfahrensparameter in einem gängigen Bereich.

Ein weiteres Gebiet der Erfindung ist die effiziente, simultane Entfernung der Liganden, die entweder in den Übergangsmetallkomplexen gebunden vorliegen oder durch überschüssigen Einsatz bzw. durch eventuelle Freisetzung während des Polymerisationsabbruchs frei in der Polymerlösung vorliegen. Es ist sehr wahrscheinlich, dass durch die Koordination der Schwefelverbindung an den Metallkern, die oft in der ATRP verwendeten multifunktionellen Aminliganden nicht vom Metallzentrum dekoordiniert werden. Auf diese Weise wird ein großer Teil der Liganden zusammen mit dem Übergangsmetall gefällt.

Zur Entfernung weiterer Ligandenanteile aus der Lösung können vor der Filtration geringe Mengen unlöslicher, bevorzugt saurer Hilfsstoffe zugegeben werden. Bei diesen Hilfsstoffen kann es sich zum Beispiel um anorganische Verbindungen wie saures Aluminiumoxid, Silica, Hydrotalcit oder andere bekannte saure, in organischen Lösungsmitteln unlösliche Verbindungen bzw. Mischungen aus den selbigen handeln. Alternativ können aber auch unlösliche organische Polysäuren wie Polyacrylsäure oder Polymethacrylsäure oder unlösliche Polymethacrylate bzw.

Polyacrylate mit hohem Säureanteil bzw. deren Mischungen oder deren Mischungen mit den zuvor aufgeführten anorganischen Verbindungen zugesetzt werden. Gegenüber dem im Stand der Technik aufgeführten Einsatz von oftmals identischen Adsorptionsmitteln werden die entsprechenden Hilfsstoffe in dem erfindungsgemäßen Verfahren nur optional eingesetzt. Ferner sind im Vergleich zu den beschriebenen Verfahren des Standes der Technik nur deutlich geringere Mengen dieser Hilfsstoffe nötig. Auch beschränkt sich deren Abtrennung auf einen zusätzlichen Filtrationsschritt oder kann auch simultan im gleichen Filtrationsschritt mit der Entfernung der gefällten Übergangsmetallverbindungen erfolgen.

Zur Reduzierung der zugesetzten Schwefelverbindungen und/oder Liganden können Adsorptionsmittel oder Adsorptionsmittelmischungen eingesetzt werden. Dies kann parallel oder in aufeinanderfolgenden Aufarbeitungsschritten erfolgen. Die Adsorptionsmittel sind aus dem Stand der Technik bekannt, vorzugsweise ausgewählt aus der Gruppe Silica und/oder Aluminiumoxid, organische Polysäuren sowie Aktivkohle.

Alternativ kann die Konzentration freier Liganden wie z.B. multifunktionelle Amine durch den Zuschlag von Aktivkohle (z.B. Norit SX plus der Fa. Norit) reduziert werden. Auch die Entfernung der Aktivkohle kann in einem gesonderten oder in einem zur Übergangsmetallentfernung simultanen Filtrationsschritt erfolgen. In einer besonders effizienten Variante wird die Aktivkohle nicht als Feststoff zur Polymerlösung gegeben, sondern die Filtration erfolgt durch mit Aktivkohle beladene Filter, die kommerziell verfügbar sind (z.B. AKS 5 der Fa. Pall Seitz Schenk). Auch zur Anwendung kommen kann eine Kombination aus der Zugabe von den zuvor beschriebenen sauren Hilfsstoffen und Aktivkohle bzw. der Zuschlag der zuvor beschrieben Hilfsstoffe und die Filtration über mit Aktivkohle beladene Filter.

Ein weiterer großer Vorteil der vorliegenden Erfindung ist die Einsatzmöglichkeit in wässrigen Systemen. Viele Übergangsmetallsulfide weisen auch in Wasser nahezu eine Nulllöslichkeit auf. Damit ist das beschriebene System zur Entfernung von Übergangsmetallkomplexen auch auf Emulsions-, Miniemulsions-, Mikroemulsions- und Suspensionsverfahren übertragbar.

Ein Problem des erfindungsgemäßen Verfahrens zur Entfernung von Übergansmetallverbindungen und von Liganden aus Polymerlösungen stellt der Einsatz der aufgeführten Schwefelverbindungen dar. Im Polymer zurückbleibende Anteile an entsprechenden Mercaptoverbindungen können zu einer Geruchsbeeinträchtigung des Polymers führen. Auch eine Beeinträchtigung der Produktfarbe und ein eingeschränktes Verwendungsspektrum zum Beispiel bezüglich kosmetischer Anwendungen wären nachteilig. Daher ist es bei dem erfindungsgemäßen Verfahren von zusätzlicher Bedeutung die entsprechenden Reste der eingesetzten Mercaptoverbindungen nahezu vollständig zu entfernen. Dazu wären verschiedene bekannte Entschwefelungsverfahren oder eine sanfte Oxidation der Thiolgruppen in Anschluss an das beschriebene Reinigungsverfahren denkbar.

Alternativ dazu ist es jedoch ein besonderer Bestandteil der vorliegenden Erfindung, dass überschüssige Anteile der beschriebene Mercaptane simultan nahezu vollständig entfernt werden, ohne dass ein zusätzlicher Reinigungsschritt nötig wäre. Zum einen werden die Mercaptane bezogen auf die Übergangsmetallverbindungen nur in einem minimalen Überschuss von 1,5 Äquivalenten, bevorzugt 1,2 Äquivalenten und besonders bevorzugt unter 1,1 Äquivalenten eingesetzt. Zum anderen wird der Gehalt an schwefelhaltigen Verbindungen durch die Verwendung von den beschriebenen sauren anorganischen und/oder organischen unlöslichen Hilfstoffen und/oder Aktivkohle und /oder mit Aktivkohle beladenen Filtern zu Entfernung besagter Liganden zusätzlich, ohne weiteren Arbeitsschritt minimiert.

Die vorliegende Erfindung bezieht sich auf die Entfernung von Übergangsmetallkomplexen aus sämtlichen mittels ATRP-Verfahren hergestellten Polymerlösungen. Im Folgenden werden die Möglichkeiten die sich aus der ATRP ergeben kurz umrissen. Diese Aufzählungen sind jedoch nicht dazu geeignet die ATRP und damit die vorliegende Erfindung eingrenzend zu beschreiben. Sie dienen vielmehr dazu, die große Bedeutung und die vielseitige Einsatzmöglichkeit der ATRP und damit auch der vorliegenden Erfindung zur Aufarbeitung entsprechender ATRP-Produkte aufzuzeigen:

Die mittels ATRP polymerisierbaren Monomere sind hinlänglich bekannt. Im Folgenden werden ein paar Beispiele aufgelistet, ohne die vorliegende Erfindung in irgendeiner Form einzuschränken. Dabei beschreibt die Schreibweise (Meth)acrylat die Ester der (Meth)acrylsäure und bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Monomere die polymerisiert werden sind ausgewählt aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl(meth)acrylat, Pentyl(meth)acrylat, 2-Ethylhexyl(meth)acrylat, Stearyl(meth)-acrylat, Lauryl(meth)acrylat, Cyclohexyl(meth)acrylat, Isobornyl(meth)acrylat; Aryl-(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat und Poly-(propylenglycol)methylether(meth)acrylat. Die Monomerauswahl kann auch jeweilige hydroxyfunktionalisierte und/oder aminofunktionalisierte und/oder mercaptofunktionalisierte und/oder olefinisch funtkionalisierte Acrylate bzw. Methacrylate wie zum Beispiel Allylmethacrylat oder Hydroxyethylmethacrylat umfassen.

Neben den zuvor dargelegten (Meth)acrylaten können die zu polymerisierenden Zusammensetzungen auch weitere ungesättigte Monomere aufweisen, die mit den zuvor genannten (Meth)acrylaten und mittels ATRP copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, halogenierte Styrole wie beispielsweise Monochlorstyrole, Dichlorstyrole, Tribromstyrole und Tetrabromstyrole; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinloxolan, Vinylfuran, Vinylthiophen, Vinylthiolan, Vinylthiazole, Vinyloxazole und Isoprenylether; Maleinsäurederivate, wie beispielsweise Maleinsäureanhydrid, Maleinimid, Methylmaleinimid und Diene wie z.B. Divinylbenzol, sowie die jeweiligen hydroxyfunktionalisierten und/oder aminofunktionalisierten und/oder mercaptofunktionalisierten und/oder, olefinisch funktionalisierten Verbindungen. Ferner können diese Copolymere auch derart hergestellt werden, dass sie eine Hydroxy- und/oder Amino- und/oder Mercaptofunktionalität und/oder eine olefinische Funktionalität in einem Substituenten aufweisen. Solche Monomere sind beispielsweise Vinylpiperidin, 1-Vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, hydrierte Vinylthiazole und hydrierte Vinyloxazole. Besonders bevorzugt werden Vinylester, Vinylether, Fumarate, Maleate, Styrole oder Acrylonitrile mit den A-Blöcken und/oder B-Blöcken copolymerisiert.

Das Verfahren kann in beliebigen halogenfreien Lösungsmitteln durchgeführt werden. Bevorzugt werden Toluol, Xylol, H₂O, Acetate, vorzugsweise Butylacetat, Ethylacetat, Propylacetat; Ketone, vorzugsweise Ethylmethylketon, Aceton; Ether; Aliphate, vorzugsweise Pentan, Hexan; Alkohole, vorzugsweise Cyclohexanol, Butanol, Hexanol aber auch Biodiesel.

Blockcopolymere der Zusammensetzung AB können mittels sequentieller Polymerisation dargestellt werden. Blockcopolymere der Zusammensetzung ABA oder ABCBA werden mittels sequentieller Polymerisation und Initiierung mit bifunktionellen Initiatoren dargestellt.

Neben der Lösungspolymerisation kann die ATPR auch als Emulsions-, Miniemulsions-, Mikroemulsions- oder Suspensionspolymerisation durchgeführt werden.

Die Polymerisation kann bei Normaldruck, Unter- oder Überdruck durchgeführt werden. Auch die Polymerisationstemperatur ist unkritisch. Im Allgemeinen liegt sie jedoch im Bereich von -20°C bis 200°C, vorzugsweise von 0°C bis 130°C und besonders bevorzugt von 50°C bis 120°C.

Vorzugsweise weisen die erfindungsgemäß gewonnen Polymere ein zahlenmittleres Molekulargewicht zwischen 5000 g/mol und 120000 g/mol, besonders bevorzugt ≤ 50000 g/mol und ganz besonders bevorzugt zwischen 7500 g/mol und 25000 g/mol auf.

Es wurde gefunden, dass die Molekulargewichtsverteilung unter 1,8, bevorzugt unter 1,6, besonders bevorzugt unter 1,4 und idealerweise unter 1,2 liegt.

Als Initiator kann jede Verbindung eingesetzt werden, die eine oder mehrere Atome bzw. Atomgruppen aufweist, welche unter den Polymerisationsbedingungen des ATRP-Verfahrens radikalisch übertragbar ist. Geeignete Initiatoren umfassen verallgemeinert folgende Formeln:
R¹R²R³C-X, R¹C(=O)-X, R¹R²R³Si-X, R¹NX₂, R¹R²N-X, (R¹)ₙP(O)ₘ-X₃₋ₙ, (R¹O)ₙP(O)ₘ X₃₋ₙ und (R¹)(R²O)P(O)ₘ-X,
wobei X ausgewählt ist aus der Gruppe bestehend aus Cl, Br, I, OR⁴, SR⁴, SeR⁴, OC(=O)R⁴, OP(=O)R⁴, OP(=O)(OR⁴)₂, OP(=O)OR⁴, O-N(R⁴)₂, CN, NC, SCN, NCS, OCN, CNO und N₃ darstellen (wobei R⁴ eine Alkylgruppe von 1 bis 20 Kohlenstoffatomen, wobei jedes Wasserstoffatom unabhängig durch ein Halogenatom, vorzugsweise Fluorid oder Chlorid ersetzt sein kann oder Alkenyl von 2 bis 20 Kohlenstoffatomen, vorzugsweise Vinyl, Alkenyl von 2 bis 10 Kolenstoffatomen, vorzugsweise Acetylenyl, Phenyl, welches mit 1 bis 5 Halogenatomen oder Alkylgruppen mit 1 bis 4 Kohlenstoffatomen substituiert sein kann, oder Aralkyl bedeutet und wobei R¹, R² und R³ unabhängig voneinander ausgewählt sind aus der Gruppe bestehend aus Wasserstoff, Halogene, Alkylgruppen mit 1 bis 20, vorzugsweise 1 bis 10 und besonders bevorzugt 1 bis 6 Kohlenstoffatomen, Cycloalkylgruppen mit 3 bis 8 Kohlenstoffatomen, Silylgruppen, Alkylsilylgruppen, Alkoxysilylgruppen, Amingruppen, Amidgruppen, COCI, OH, CN, Alkenyl- oder Alkinylgruppen mit 2 bis 20 Kohlenstoffatomen, vorzugsweise 2 bis 6 Kohlenstoffatomen und besonders bevorzugt Allyl oder Vinyl, Oxiranyl, Glycidyl, Alkenyl- oder Alkenylgruppen mit 2 bis 6 Kohlenstoffatomen, welche mit Oxiranyl oder Glycidyl, Aryl, Heterocyclyl, Aralkyl, Aralkenyl (arylsubstituiertes Alkenyl, wobei Aryl wie zuvor definiert ist und Alkenyl Vinyl ist, welches mit ein oder zwei C₁ bis C₆ Alkylgruppen, in welchen ein bis alles der Wasserstoffatome, vorzugsweise eines durch Halogen substituiert sind (vorzugsweise Fluor oder Chlor, wenn ein oder mehr Wasserstoffatome ersetzt sind, und vorzugsweise Fluor, Brom oder Brom, falls ein Wasserstoffatom ersetzt ist) Alkenylgruppen mit 1 bis 6 Kohlenstoffatomen, die mit 1 bis 3 Substituenten (vorzugsweise 1) ausgewählt aus der Gruppe bestehend aus C₁ bis C₄ Alkoxy, Aryl, Heterocyclyl, Ketyl, Acetyl, Amin, Amid, Oxiranyl und Glycidyl substituiert sind und m=0 oder 1; m=0, 1 oder 2 darstellt. Vorzugsweise sind nicht mehr als zwei der Reste R¹, R² und R³ Wasserstoff, besonders bevorzugt ist maximal einer der Reste R¹, R² und R³ Wasserstoff.

Zu den besonders bevorzugten Initiatoren gehören Benzylhalogenide, wie p-Chlormethylstyrol, Hexakis(a-brommethyl)benzol, Benzylchlorid, Benzylbromid, 1-Brom-i-phenylethan und 1-Chlor-i-phenylethan. Weiterhin besonders bevorzugt sind Carbonsäurederivate, die an der α-Position halogeniert sind, wie beispielsweise Propyl-2-brompropionat, Methyl-2-chlorpropionat, Ethyl-2-chlorpropionat, Methyl-2-brompropionat oder Ethyl-2-bromisobutyrat. Bevorzugt sind auch Tosylhalogenide, wie p-Toluolsulfonylchlorid; Alkylhalogenide, wie Tetrachlormethan, Tribromethan, 1-Vinylethylchlorid oder 1-Vinylethylbromid; und Halogenderivate von Phosphorsäureestem, wie Demethylphosphonsäurechlorid.

Eine besondere, zur Synthese von Blockcopolymeren geeignete Gruppe der Initiatoren stellen die Makroinitiatoren dar. Diese zeichnen sich dadurch aus, dass es sich bei 1 bis 3, bevorzugt 1 bis 2 und ganz besonders bevorzugt bei1 Rest aus der Gruppe R¹, R² und R³ um makromolekulare Reste handelt. Diese Makroreste können ausgewählt sein aus der Gruppe der Polyolefine, wie Polyethylene oder Polypropylene; Polysiloxane; Polyether, wie Polyethylenoxid oder Polypropylenoxid; Polyester, wie Polymilchsäure oder anderen bekannten, endgruppenfunktionalisierbaren Makromoleküle. Dabei können die makromolekularen Reste jeweils ein Molekulargewicht zwischen 500 und 100000, bevorzugt zwischen 1000 und 50000 und besonders bevorzugt zwischen 1500 und 20000 aufweisen. Auch möglich ist es, besagte Makromoleküle zur Initiierung der ATRP einzusetzen, die an beiden Enden als Initiator geeignete Gruppen aufweisen, zum Beispiel in Form eines Bromtelechelen. Mit Makroinitiatoren dieser Art ist es möglich ABA-Triblockcopolymere aufzubauen.

Eine weitere wichtige Gruppe der Initiatoren stellen die bi- oder multifunktionellen Initiatoren dar. Mit multifunktionellen Initiatormolekülen ist es zum Beispiel möglich, Sternpolymere zu synthetisieren. Mit bifunktionellen sind Tri- bzw. Pentablockcopolymere und telechele Polymere darstellbar. Als bifunktionelle Initiatoren können RO₂C-CHX-(CH₂)ₙ-CHX-CO₂R, RO₂C-C(CH₃)X-(CH₂)ₙ-C(CH₃)X-CO₂R, RO₂C-CX₂-(CH₂)ₙ-CX₂-CO_{2R}, RC(O)-CHX-(CH₂)ₙ-CHX-C(O)R, RC(O)-C(CH₃)X-(CH₂)ₙ-C(CH)₃X-C(O)R, RC(O)-CX₂-(CH₂)ₙ-CX₂-C(O)R, XCH₂-CO₂-(CH₂)ₙ-OC(O)CH₂X, CH₃CHX-CO₂-(CH₂)ₙ-OC(O)CHXCH₃, (CH₃)₂CX-CO₂-(CH₂)ₙ-OC(O)CX(CH₃)₂, X₂CH-CO₂-(CH₂)ₙ-OC(O)CHX₂, CH₃CX₂-CO₂-(CH₂)ₙ-OC(O)CX₂CH₃, XCH₂C(O)C(O)CH₂X, CH₃CHXC(O)C(O)CHXCH₃, XC(CH₃)₂C(O)C(O)CX(CH₃)₂, X₂CHC(O)C(O)CHX₂, CH₃CX₂C(O)C(O)CX₂CH₃, XCH₂-C(O)-CH₂X, CH₃-CHX-C(O)-CHX-CH₃, CX(CH₃)₂-C(O)- CX(CH₃)₂, X₂CH-C(O)-CHX₂, C₆H₅-CHX-(CH₂)ₙ-CHX-C₆H₅, C₆H₅-CX₂-(CH₂)ₙ-CX₂-C₆H₅, C₆H₅-CX₂-(CH₂)ₙ-CX₂-C₆H₅, o,- m- bzw. p-XCH₂-Ph-CH₂X, o,- m- bzw. p-CH₃CHX-Ph-CHXCH₃, o,- m-bzw. p-(CH₃)₂CX-Ph-CX(CH₃)₂, o,- m- bzw. p-CH₃CX₂-Ph-CX₂CH₃, o,- m- bzw. p-X₂CH-Ph-CHX₂, o,- m- bzw. p-XCH₂-CO₂-Ph-OC(O)CH₂X, o,- m- bzw. p-CH₃CHX-CO₂-Ph-OC(O)CHXCH₃, o,- m- bzw. p-(CH₃)₂CX-CO₂-Ph-OC(O)CX(CH₃)₂, CH₃CX₂-CO₂-Ph-OC(O)CX₂CH₃, o,- m- bzw. p-X₂CH-CO₂-Ph-OC(O)CHX₂ oder o,- m- bzw. p-XSO₂-Ph-SO₂X (X steht für Chlor, Brom oder Iod; Ph steht für Phenylen (C₆H₄); R repräsentiert einen aliphatischen Rest aus 1 bis 20 Kohlenstoffatomen, der linearer, verzweigter oder auch cyclischer Struktur sein kann, gesättigt oder einfach bzw. mehrfach ungesättigt sein kann und einen bzw. mehrere Aromaten enthalten kann oder aber aromatenfrei ist und n ist eine Zahl zwischen 0 und 20) eingesetzt werden. Vorzugsweise werden 1,4-Butandiol-di-(2-bromo-2-methylpropionat), 1,2-Ethylenglycol-di-(2-bromo-2-methylpropionat), 2,5-Dibrom-adipinsäure-di-ethylester oder 2,3-Dibrom-maleinsäure-di-ethylester verwendet. Aus dem Verhältnis Initiator zu Monomer ergibt sich das spätere Molekulargewicht, falls das gesamte Monomer umgesetzt wird.

Katalysatoren für ATPR sind in Chem.Rev. 2001, 101, 2921 aufgeführt. Es werden überwiegend Kupferkomplexe beschrieben - unter anderem kommen aber auch Eisen-, Kobalt-, Chrom-, Mangan-, Molybdän-, Silber-, Zink-, Palladium-, Rhodium-, Platin-, Ruthenium-, Iridium-, Ytterbium-, Samarium-, Rhenium- und/oder Nickelverbindungen zur Anwendung. Allgemein können alle Übergangsmetallverbindungen verwendet werden, die mit dem Initiator; bzw. der Polymerkette, die eine übertragbare Atomgruppe aufweist, einen Redox-Zyklus bilden können. Kupfer kann dazu beispielsweise ausgehend von Cu₂O, CuBr, CuCl, Cul, CuN₃, CuSCN, CuCN, CuNO₂, CuNO₃, CuBF₄, Cu(CH₃COO) oder Cu(CF₃COO) dem System zugeführt werden.

Eine Alternative zu der beschriebenen ATRP stellt eine Variante derselben dar: In der so genannten reversen ATRP können Verbindungen in höheren Oxidationsstufen wie z.B. CuBr₂, CuCl₂, CuO, CrCl₃, Fe₂O₃ oder FeBr₃ eingesetzt werden. In diesen Fällen kann die Reaktion mit Hilfe klassischer Radikalbildner wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Die reverse ATRP wurde u.a. von Wang und Matyjaszewski in Macromolekules (1995), Bd. 28, S. 7572ff beschrieben.

Eine Variante der reversen ATRP stellt der zusätzliche Einsatz von Metallen in der Oxidationsstufe null dar. Durch eine anzunehmende Komproportionierung mit den Übergangsmetallverbindungen der höheren Oxidationsstufe wird eine Beschleunigung der Reaktionsgeschwindigkeit bewirkt. Dieses Verfahren wird in WO 98/40415 näher beschrieben.

Das molare Verhältnis Übergangsmetall zu monofunktionellem Initiator liegt im Allgemeinen im Bereich von 0,01:1 bis 10:1, vorzugsweise im Bereich von 0,1:1 bis 3:1 und besonders bevorzugt im Bereich von 0,5:1 bis 2:1, ohne dass hierdurch eine Beschränkung erfolgen soll.

Das molare Verhältnis Übergangsmetall zu bifunktionellem Initiator liegt im Allgemeinen im Bereich von 0,02:1 bis 20:1, vorzugsweise im Bereich von 0,2:1 bis 6:1 und besonders bevorzugt im Bereich von 1:1 bis 4:1, ohne dass hierdurch eine Beschränkung erfolgen soll.

Um die Löslichkeit der Metalle in organischen Lösungsmitteln zu erhöhen und gleichzeitig die Bildung stabiler und dadurch polymerisationsinaktiver Organometallverbindungen zu vermeiden, werden Liganden dem System zugegeben. Zusätzlich erleichtern die Liganden die Abstraktion der übertragbaren Atomgruppe durch die Übergangsmetallverbindung. Eine Auflistung bekannter Liganden findet sich beispielsweise in WO 97/18247, WO 97/47661 oder WO 98/40415. Als koordinativer Bestandteil weisen die als Ligand verwendeten Verbindungen zumeist ein oder mehrere Stickstoff-, Sauerstoff-, Phosphor- und/oder Schwefelatome auf. Besonders bevorzugt sind dabei stickstoffhaltige Verbindungen. Ganz besonders bevorzugt sind stickstoffhaltige Chelatliganden. Als Beispiele seien 2,2'-Bipyridin, N,N,N',N",N"-Pentamethyldiethylentriamin (PMDETA), Tris(2-aminoethyl)amin (TREN), N,N,N',N'-Tetramethylethylendiamin oder 1,1,4,7,10,10-Hexamethyltriethylentetramin aufgeführt. Wertvolle Hinweise zur Auswahl und Kombination der einzelnen Komponenten findet der Fachmann in WO 98/40415.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand (L) zu Übergangsmetall ist abhängig von der Zähnigkeit des Liganden und der Koordinationszahl des Übergangsmetalls (M). Im Allgemeinen liegt das molare Verhältnis im Bereich 100:1 bis 0,1:1, vorzugsweise 6:1 bis 0,1:1 und besonders bevorzugt 3:1 bis 1:1, ohne dass hierdurch eine Beschränkung erfolgen soll.

Für die erfindungsgemäß aufgearbeiteten Produkte ergibt sich ein breites Anwendungsfeld. Die Auswahl der Anwendungsbeispiele ist nicht dazu geeignet die Verwendung der erfindungsgemäßen Polymere einzuschränken. Die Beispiele sollen einzig dazu dienen, stichprobenartig die breite Einsatzmöglichkeit der beschriebenen Polymere darzustellen. Beispielsweise werden mittels ATRP synthetisierte Polymere als Präpolymere in Hotmelts, Klebmassen, Dichtmassen, Heißsiegelmassen, für polymeranaloge Reaktionen oder zum Aufbau von Blockcopolymeren verwendet. Die Polymere können auch Verwendung finden in Formulierungen zur kosmetischen Anwendung, in Beschichtungsmaterialien, als Dispergiermittel, als Polymeradditiv, als Verträglichkeitsvermittler oder in Verpackungen.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

### Beispiel 1

In einem mit Rührer, Thermometer, Rückflusskühler, Stickstoffeinleitungsrohr und Tropftrichter ausgestatteten Doppelmantelgefäß wurden unter N₂-Atmosphäre 15 g n-Butylacrylat, 15,5 g Butylacetat, 0,2 g Kupfer(I)oxid und 0,5 g PMDETA vorgelegt. Die Lösung wird für 15 min bei 60 °C gerührt. Anschließend wird bei gleicher Temperatur 0,47 g 1,4-Butandiol-di-(2-bromo-2-methylpropionat) zugegeben. Es wird für eine Polymerisationszeit von 4 Stunden bei 70 °C gerührt. Nach ca. 5 min Einleiten von Luftsauerstoff zum Abbruch der Reaktion werden 0,28 g Thioglycolsäure zugegeben. Die zuvor grünliche Lösung färbt sich spontan aprikofarben und ein roter Niederschlag fällt aus. Die Filtration erfolgt mittels einer Überdruckfiltration. Das mittlere Molekulargewicht und die Molekulargewichtsverteilung werden abschließend durch SEC-Messungen bestimmt. Von einer getrockneten Probe des Filtrats wird anschließend mittels AAS der Kupfergehalt bestimmt.

Die verbleibende Lösung wird mit 8 g Tonsil Optimum 210 FF (Fa. Südchemie) versetzt, 30 min gerührt und anschließend unter Überdruck über einen Aktivkohlefilter (AKS 5 der Fa. Pall Seitz Schenk) filtriert. Auch von dieser Fraktion wird mittels AAS der Kupfergehalt einer getrockneten Probe bestimmt und eine GPC-Messung vorgenommen.

### Beispiel 2

In einem mit Rührer, Thermometer, Rückflusskühler, Stickstoffeinleitungsrohr und Tropftrichter ausgestatteten Doppelmantelgefäß wurden unter N₂-Atmosphäre 15 g n-Butylacrylat, 15,5 g Butylacetat, 0,2 g Kupfer(I)oxid und 0,5 g PMDETA vorgelegt. Die Lösung wird für 15 min. bei 60 °C gerührt. Anschließend wird bei gleicher Temperatur 0,49 g 1,4-Butandiol-di-(2-bromo-2-methylpropionat) zugegeben. Es wird für eine Polymerisationszeit von 4 Stunden bei 70 °C gerührt. Nach ca. 5 min Einleiten von Luftsauerstoff zum Abbruch der Reaktion werden 0,8 g n-Dodecylmercaptan zugegeben. Die zuvor grünliche Lösung färbt sich spontan rot und ein roter Niederschlag fällt aus. Die Filtration erfolgt mittels einer Überdruckfiltration. Das mittlere Molekulargewicht und die Molekulargewichtsverteilung werden abschließend durch SEC-Messungen bestimmt. Von einer getrockneten Probe des Filtrats wird anschließend mittels AAS der Kupfergehalt bestimmt.

Die verbleibende Lösung wird mit 8 g Tonsil Optimum 210 FF (Fa. Südchemie) versetzt, 30 min gerührt und anschließend unter Überdruck über einen Aktivkohlefilter (AKS 5 der Fa. Pall Seitz Schenk) filtriert. Auch von dieser Fraktion wird mittels AAS der Kupfergehalt einer getrockneten Probe bestimmt und eine GPC-Messung vorgenommen.

### Vergleichsbeispiel 1

In einem mit Rührer, Thermometer, Rückflusskühler, Stickstoffeinleitungsrohr und Tropftrichter ausgestatteten Doppelmantelgefäß wurden unter N₂-Atmosphäre 15 g n-Butylacrylat, 15,5 g Butylacetat, 0,2 g Kupfer(I)oxid und 0,5 g PMDETA vorgelegt. Die Lösung wird für 15 min. bei 60 °C gerührt. Anschließend wird bei gleicher Temperatur 0,48 g 1,4-Butandiol-di-(2-bromo-2-methylpropionat) zugegeben. Es wird für eine Polymerisationszeit von 4 Stunden bei 70 °C gerührt. Nach ca. 5 min Einleiten von Luftsauerstoff zum Abbruch der Reaktion werden der Lösung 8 g Tonsil Optimum 210 FF (Fa. Südchemie) und 4 Gew% Wasser zugesetzt und 60 min gerührt. Die anschließende Filtration erfolgt unter Druck über einen Aktivkohlefilter (AKS 5 der Fa. Pall Seitz Schenk). Das mittlere Molekulargewicht und die Molekulargewichtsverteilung werden abschließend durch SEC-Messungen bestimmt. Von einer getrockneten Probe des Filtrats wird anschließend mittels AAS der Kupfergehalt bestimmt.

### Beispiel 3

In einem mit Rührer, Thermometer, Rückflusskühler, Stickstoffeinleitungsrohr und Tropftrichter ausgestatteten Doppelmantelgefäß wurden unter N₂-Atmosphäre 10 g Methylmethacrylat, 15,8 g Butylacetat, 0,2 g Kupfer(I)oxid und 0,5 g PMDETA vorgelegt. Die Lösung wird für 15 min. bei 60 °C gerührt. Anschließend wird bei gleicher Temperatur 0,47 g 1,4-Butandiol-di-(2-bromo-2-methylpropionat) zugegeben. Es wird für eine Polymerisationszeit von 4 Stunden bei 70 °C gerührt. Nach ca. 5 min Einleiten von Luftsauerstoff zum Abbruch der Reaktion werden 0,4 g 2-Mercaptoethanol zugegeben. Die zuvor grünliche Lösung färbt sich spontan rot und ein roter Niederschlag fällt aus. Die Filtration erfolgt mittels einer Überdruckfiltration. Das mittlere Molekulargewicht und die Molekulargewichtsverteilung werden abschließend durch SEC-Messungen bestimmt. Von einer getrockneten Probe des Filtrats wird anschließend mittels AAS der Kupfergehalt bestimmt.

Die verbleibende Lösung wird mit 8 g Tonsil Optimum 210 FF (Fa. Südchemie) versetzt, 30 min gerührt und anschließend unter Überdruck über einen Aktivkohlefilter (AKS 5 der Fa. Pall Seitz Schenk) filtriert. Auch von dieser Fraktion wird mittels AAS der Kupfergehalt einer getrockneten Probe bestimmt und eine GPC-Messung vorgenommen.

### Vergleichsbeispiel 2

In einem mit Rührer, Thermometer, Rückflusskühler, Stickstoffeinleitungsrohr und Tropftrichter ausgestatteten Doppelmantelgefäß wurden unter N₂-Atmosphäre 10 g Methylmethacrylat, 15,8 g Butylacetat, 0,2 g Kupfer(I)oxid und 0,5 g PMDETA vorgelegt. Die Lösung wird für 15 min. bei 60 °C gerührt. Anschließend wird bei gleicher Temperatur 0,47 g 1,4-Butandiol-di-(2-bromo-2-methylpropionat) zugegeben. Es wird für eine Polymerisationszeit von 4 Stunden bei 70 °C gerührt. Nach ca. 5 min Einleiten von Luftsauerstoff zum Abbruch der Reaktion werden der Lösung 8 g Tonsil Optimum 210 FF (Fa. Südchemie) und 4 Gew% Wasser zugesetzt und 60 min gerührt. Die Filtration erfolgt mittels einer Überdruckfiltration über einen Aktivkohlefilter (AKS 5 der Fa. Pall Seitz Schenk). Das mittlere Molekulargewicht und die Molekulargewichtsverteilung werden abschließend durch SEC-Messungen bestimmt. Von einer getrockneten Probe des Filtrats wird anschließend mittels AAS der Kupfergehalt bestimmt.

**Tabelle 1**

| Beispiel | Beispiel 1 | Beispiel 2 | Vergleich 1 | Beispiel 3 | Vergleich 2 |
|---|---|---|---|---|---|
| Monomer | MMA | n-BA | n-BA | MMA | MMA |
| Cu-Konzentration (Polymerisation) | ca. 5,5 mg/g | | | | |
| Fällungsmittel | TGS | n-DDM | - | MEOH | - |
| Adsorptionsmittel | - | - | Alox/Silica | - | Alox/Silica |
| Cu-Konzentration (1. Filtration) | 0,1 µg/g | 0,5 µg/g | 44 µg/g | 0,3 µg/g | 22 µg/g |
| Adsorptionsmittel | Alox/Silica/Aktivkohlefilt. | Alox/Silica/Aktivkohlefilt. | Alox/Silica/Aktivkohlefilt. | Alox/Silica/Aktivkohlefilt. | Alox/Silica/Aktivkohlefilt. |
| Cu-Konzentration (2. Filtration) | 0,06 µg/g | 0,2 µg/g | 10 µg/g | 0,09 µg/g | 4 µg/g |
| S-Gehalt (nach Zugabe) | 3,0 mg/g | 3,9 mg/g | - | 5,0 mg/g | - |
| Äquivalente zu Cu | 1,09 | 1,4 | - | 1,8 | - |
| S-Gehalt (2. Filtration) | 6 µg/g | 48 µg/g | - | 24 µg/g | - |
| Mₙ (vor Reinigung) | 8900 | 9800 | 9900 | 9300 | 9000 |
| M_{w}/Mₙ (vor Reinigung) | 1,20 | 1,18 | 1,24 | 1,17 | 1,22 |
| Mₙ (nach Reinigung) | 8900 | 9800 | 9800 | 9400 | 9000 |
| M_{w}/Mₙ (nach Reinigung) | 1,19 | 1,18 | 1,22 | 1,16 | 1,23 |

| | | | | | |
|---|---|---|---|---|---|
| MMA= Methylmethacrylat; n-BA= n-Butylacrylat; n-DDM= n-Dodecylmercaptan; TGS= Thioglycolsäure; MEOH= 2-Mercaptoethanol; Alox= Aluminiumoxid; | | | | | |

Aus den Beispielen ist klar ersichtlich, dass die bereits sehr guten Ergebnisse mit Adsorptionsmitteln zur Entfernung von Übergangsmetallkomplexen (in diesem Fall Kupferkomplexen) aus Polymerlösungen, durch die vorhergehende Fällung mit Schwefelverbindungen klar verbessert werden kann. In den aufgeführten Beispielen, die nicht dazu dienen, die vorliegende Erfindung in irgendeiner Weise einzuschränken, wurden drei verschiedene, als Regler in der freiradikalischen Polymerisation Verwendung findende Mercaptane zur Fällung eingesetzt.

Die vorliegenden Beispiele wurden auf den ATRP-Prozess bezogen. Dabei wurden die Polymerisationsparameter dergestalt ausgewählt, dass mit besonders hohen Kupferkonzentrationen gearbeitet werden musste: Niedriges Molekulargewicht, 50%ige Lösung und bifunktioneller Initiator.

Aus den Ergebnissen zu Beispiel 1 erkennt man, dass entsprechende Schwefelverbindungen bezogen auf die Übergangsmetallverbindung bereits in kleinstem Überschuss eingesetzt zu einer sehr effizienten Fällung führen. Man erkennt aus den Beispielen auch, dass mit sämtlichen Thiol funktionalisierten Reagenzien eine effizientere Entfernung der Übergangsmetallverbindungen aus der Lösung realisierbar ist, als dies durch eine bereits optimierte Aufarbeitung mit Adsorptionsmitteln möglich ist. Dennoch kann durch eine geeignete Wahl des Fällungsmittels das jeweilige Ergebnis noch gesteigert werden. So ist die Verwendung von polaren Mercaptanen wie TGS in unpolaren Medien wahrscheinlich effizienter. Umgekehrt werden unpolare Fällungsmittel wie n-DDM in polaren Medien besser geeignet sein. Auch kann durch eine zusätzliche funktionelle Gruppe wie eine Alkoholgruppe (MEOH) oder eine Säuregruppe (TGS) die Entfernung der überschüssigen Schwefelverbindung gesteigert werden.

Aus den Angaben zu den Restschwefelgehalten ist in der Tabelle bereits eine zufrieden stellende Entfernung ersichtlich. Durch Variation im Rahmen des erfindungsgemäßen Verfahrens ist eine Steigerung der Abtrennungseffizienz darüber hinaus realisierbar.

Aus dem Vergleich der Molekulargewichte und Molekulargewichtsverteilungen vor und nach der Aufarbeitung erkennt man aus allen Beispielen und Vergleichsbeispielen, dass die angewendeten Methoden keinen Einfluss auf die Polymercharakteristika haben.

## Patentansprüche

1. Verfahren zur Abtrennung von Übergangsmetallverbindungen aus Polymerlösungen nach einer Atom Transfer Radikal Polymerisation (ATRP), **dadurch gekennzeichnet, dass** die Übergangsmetallverbindung mittels Zusatz eins geeigneten Fällungsmittels gefällt, anschließend mittels Filtration abgetrennt wird, und dass es sich bei dem Fällungsmittel um ein Mercaptan oder eine Verbindung mit einer Thiolgruppe handelt.

2. Verfahren zur Abtrennung von Übergangsmetallverbindungen aus Polymerlösungen nach einer Atom Transfer Radikal Polymerisation (ATRP) gemäß Anspruch 1, **dadurch gekennzeichnet, dass** es sich bei dem Fällungsmittel um einen in der freiradikalischen Polymerisationstechnik gebräuchlichen Regler handelt.

3. Verfahren zur Abtrennung von Übergangsmetallverbindungen aus Polymerlösungen nach einer Atom Transfer Radikal Polymerisation (ATRP) gemäß der Ansprüche 1-2, **dadurch gekennzeichnet, dass** die Übergangsmetallverbindung nach Abbruch einer Polymerisation gefällt wird.

4. Verfahren zur Abtrennung von Übergangsmetallverbindungen aus Polymerlösungen nach einer Atom Transfer Radikal Polymerisation (ATRP) gemäß Anspruch 1, **dadurch gekennzeichnet, dass** bezogen auf die Konzentration der Übergangsmetallverbindung höchstens 1,5, bevorzugt höchstens 1,1 molare Äquivalente des Fällungsmittels eingesetzt werden.

5. Verfahren gemäß der Ansprüche 1-4, **dadurch gekennzeichnet, dass** es sich bei der als Katalysator in der Polymerisation eingesetzten Übergangsmetallverbindung um Kupfer-, Eisen-, Kobalt-, Chrom-, Mangan-, Molybdän-, Silber-, Zink-, Palladium-, Rhodium-, Platin-, Ruthenium-, Iridium-, Ytterbium-, Samarium-, Rhenium- und/oder Nickelverbindungen, bevorzugt um eine Kupferverbindung handelt.

6. Verfahren gemäß Anspruch 5, **dadurch gekennzeichnet, dass** die Kupferverbindung als Cu₂O, CuBr, CuCl, Cul, CuN₃, CuSCN, CuCN, CuNO₂, CuNO₃, CuBF₄, Cu(CH₃COO) und/oder Cu(CF₃COO) dem System vor Start der Polymerisation zugesetzt wurde.

7. Verfahren gemäß einem der vorhergehenden Ansprüche 1-6, **dadurch gekennzeichnet, dass** der Katalysator vor der Polymerisation mit einer stickstoff-, sauerstoff-, schwefel- oder phosphorhaltigen Verbindung, bevorzugt mit einem N-haltigen Chelatliganden, die eine oder mehrere koordinative Bindungen mit dem Übergangsmetall zu einem Metall-Ligand-Komplex eingehen kann, zusammengebracht wird.

8. Verfahren gemäß einem der vorhergehenden Ansprüche 1-7, **dadurch gekennzeichnet, dass** man in der vorangehenden Polymerisation einen Initiator einsetzt, der Cl, Br, I, SCN und/oder N₃ aufweist.

9. Verfahren gemäß Anspruch 8, **dadurch gekennzeichnet, dass** der Initiator bezüglich der aktiven Gruppen ein-, zwei- oder mehrwertig sein kann.

10. Verfahren gemäß einem der vorhergehenden Ansprüche, **dadurch gekennzeichnet, dass** das Polymer durch Polymerisation von Alkylacrylaten, Alkylmethacrylaten, Styrolen, Vinylestern, Vinylethern, Fumaraten, Maleaten, Itaconaten, Acrylonitrilen und/oder anderen mittels ATRP polymerisierbaren Monomeren und/oder Mischungen aus Alkylacrylaten, Alkylmethacrylaten, Vinylestern, Vinylethern, Fumaraten, Maleaten, Itaconaten, Styrolen, Acrylonitrilen, und/oder anderen mittels ATRP polymerisierbaren Monomeren erhältlich ist.

11. Verfahren gemäß einem der vorhergehenden Ansprüche, **dadurch gekennzeichnet, dass** das Polymer ein zahlenmittleres Molekulargewicht zwischen 5000 g/mol und 120000 g/mol aufweist.

12. Verfahren gemäß einem der vorhergehenden Ansprüche, **dadurch gekennzeichnet, dass** das Polymer eine Molekulargewichtsverteilung kleiner 1,8, bevorzugt kleiner 1,4 aufweist.

13. Verfahren gemäß einem der vorhergehenden Ansprüche, **dadurch gekennzeichnet, dass** das Polymer nach der Entfernung der Übergangsmetallverbindung keine Veränderungen bzgl. der Polymereigenschaften Funktionalisierungsgrad, Glastemperatur, Struktur, Molekulargewicht, Verzweigung und/oder Molekulargewichtsverteilung aufweist.

14. Verfahren gemäß einem der vorhergehenden Ansprüche, **dadurch gekennzeichnet, dass** die Fällung und die anschließende Filtration bei einer Temperatur im Bereich zwischen 0 °C und 120 °C durchgeführt werden.

15. Verfahren gemäß einem der vorhergehenden Ansprüche, **dadurch gekennzeichnet, dass** der Metallgehalt in der Polymerlösung durch die Fällung und die anschließende Filtration um mindestens 80 Gew-%, bevorzugt um mindestens 95 Gew-% abnimmt.

16. Verfahren gemäß einem der vorhergehenden Ansprüche, **dadurch gekennzeichnet, dass** zur Reduzierung der zugesetzten Schwefelverbindung und/oder der zugesetzten Liganden ein Adsorptionsmittel oder eine Adsorptionsmittelmischung eingesetzt wird.

17. Verfahren gemäß Anspruch 16, **dadurch gekennzeichnet, dass** es sich bei dem Adsorptionsmittel oder der Adsorptionsmischung um Silica und/oder um Aluminiumoxid oder um eine organische Polysäure oder um Aktivkohle handelt.

18. Verfahren gemäß Anspruch 17, **dadurch gekennzeichnet, dass** die Aktivkohle in Form eines Aktivkohlefilters bei der Filtration Verwendung findet.

## Claims

1. Process for removing transition metal compounds from polymer solutions after an atom transfer radical polymerization (ATRP), **characterized in that** the transition metal compound is precipitated by means of addition of a suitable precipitant, then removed by means of filtration, and **in that** the precipitant is a mercaptan or a compound having a thiol group.

2. Process for removing transition metal compounds from polymer solutions after an atom transfer radical polymerization (ATRP) according to Claim 1, **characterized in that** the precipitant is a regulator customary in radical polymerization technology.

3. Process for removing transition metal compounds from polymer solutions after an atom transfer radical polymerization (ATRP) according to Claims 1-2, **characterized in that** the transition metal compound is precipitated after termination of a polymerization.

4. Process for removing transition metal compounds from polymer solutions after an atom transfer radical polymerization (ATRP) according to Claim 1, **characterized in that**, based on the concentration of the transition metal compound, at most 1.5, preferably at most 1.1, molar equivalents of the precipitant are used.

5. Process according to Claims 1-4, **characterized in that** the transition metal compound used as a catalyst in the polymerization comprises copper compounds, iron compounds, cobalt compounds, chromium compounds, manganese compounds, molybdenum compounds, silver compounds, zinc compounds, palladium compounds, rhodium compounds, platinum compounds, ruthenium compounds, iridium compounds, ytterbium compounds, samarium compounds, rhenium compounds and/or nickel compounds, preferably a copper compound.

6. Process according to Claim 5, **characterized in that** the copper compound has been added to the system before the start of the polymerization in the form of Cu₂O, CuBr, CuCl, Cul, CuN₃, CuSCN, CuCN, CuNO₂, CuNO₃, CuBF₄, Cu (CH₃COO) and/or Cu(CF₃COO).

7. Process according to one of the preceding Claims 1-6, **characterized in that** the catalyst is combined before the polymerization with a nitrogen, oxygen, sulphur or phosphorus compound, preferably with an N-containing chelate ligand, which can enter into one or more coordinate bonds with the transition metal to form a metal-ligand complex.

8. Process according to one of the preceding Claims 1-7, **characterized in that** an initiator is used in the preceding polymerization which comprises Cl, Br, I, SCN and/or N₃.

9. Process according to Claim 8, **characterized in that** the initiator may be mono-, di- or polyvalent with regard to the active groups.

10. Process according to one of the preceding claims, **characterized in that** the polymer is obtainable by polymerization of alkyl acrylates, alkyl methacrylates, styrenes, vinyl esters, vinyl ethers, fumarates, maleates, itaconates, acrylonitriles and/or other monomers polymerizable by means of ATRP and/or mixtures of alkyl acrylates, alkyl methacrylates, vinyl esters, vinyl ethers, fumarates, maleates, itaconates, styrenes, acrylonitriles, and/or other monomers polymerizable by means of ATRP.

11. Process according to one of the preceding claims, **characterized in that** the polymer has a number-average molecular weight between 5000 g/mol and 120 000 g/mol.

12. Process according to one of the preceding claims, **characterized in that** the polymer has a molecular weight distribution of less than 1.8, preferably less than 1.4.

13. Process according to one of the preceding claims, **characterized in that** the polymer, after the removal of the transition metal compound, has no changes regarding the polymer properties of degree of functionalization, glass transition temperature, structure, molecular weight, branching and/or molecular weight distribution.

14. Process according to one of the preceding claims, **characterized in that** the precipitation and subsequent filtration are performed at a temperature in the range between 0°C and 120°C.

15. Process according to one of the preceding claims, **characterized in that** the metal content in the polymer solution decreases by at least 80% by weight, preferably by at least 95% by weight, as a result of the precipitation and subsequent filtration.

16. Process according to one of the preceding claims, **characterized in that** the sulphur compound added and/or the ligands added are minimized by using an adsorbent or an adsorbent mixture.

17. Process according to Claim 16, **characterized in that** the adsorbent or the adsorbent mixture is silica and/or aluminium oxide or an organic polyacid or activated carbon.

18. Process according to Claim 17, **characterized in that** the activated carbon finds use in the filtration in the form of an activated carbon filter.

## Revendications

1. Procédé pour la séparation de composés contenant des métaux de transition à partir de solutions de polymères après une polymérisation radicalaire amorcée par transfert d'atomes (ATRP, *Atom Transfer Radical Polymerisation*), **caractérisé en ce qu'**on sépare le composé contenant un métal de transition par addition d'un agent de précipitation approprié, puis par filtration, et **en ce que** l'agent de précipitation consiste en un mercaptan ou un composé comportant un groupe thiol.

2. Procédé pour la séparation de composés contenant des métaux de transition à partir de solutions de polymères après une polymérisation radicalaire amorcée par transfert d'atomes (ATRP) selon la revendication 1, **caractérisé en ce que** l'agent de précipitation consiste en un régulateur usuel dans la technique de polymérisation amorcée par radicaux libres.

3. Procédé pour la séparation de composés contenant des métaux de transition à partir de solutions de polymères après une polymérisation radicalaire amorcée par transfert d'atomes (ATRP) selon les revendications 1-2, **caractérisé en ce qu'**on fait précipiter le composé contenant un métal de transition après l'arrêt de la polymérisation.

4. Procédé pour la séparation de composés contenant des métaux de transition à partir de solutions de polymères après une polymérisation radicalaire amorcée par transfert d'atomes (ATRP) selon la revendication 1, **caractérisé en ce qu'**on utilise au maximum 1,5, de préférence au maximum 1,1 équivalents molaires de l'agent de précipitation par rapport à la concentration du composé contenant un métal de transition.

5. Procédé selon les revendications 1-4, **caractérisé en ce que** le composé contenant un métal de transition qui est utilisé comme catalyseur dans la polymérisation consiste en des composés contenant du cuivre, du fer, du cobalt, du chrome, du manganèse, du molybdène, de l'argent, du zinc, du palladium, du rhodium, du platine, du ruthénium, de l'iridium, de l'ytterbium, du samarium, du rhénium et/ou du nickel, de préférence en un composé contenant du cuivre.

6. Procédé selon la revendication 5, **caractérisé en ce que** le composé contenant du cuivre a été ajouté sous forme de Cu₂O, CuBr, CuCl, Cul, CuN₃, CuSCN, CuCN, CuNO₂, CuNO₃, CuBF₄, Cu (CH₃COO) et/ou Cu(CF₃COO) au système avant le début de la polymérisation.

7. Procédé selon l'une quelconque des revendications 1-6 précédentes, **caractérisé en ce qu'**avant la polymérisation le catalyseur est réuni avec un composé azoté, oxygéné, soufré ou phosphoré, de préférence avec un ligand chélate contenant de l'azote, qui peut entrer en une ou plusieurs liaisons de coordination avec le métal de transition pour former un complexe métal-ligand.

8. Procédé selon l'une quelconque des revendications 1-7 précédentes, **caractérisé en ce que** dans la polymérisation précédente on utilise un amorceur qui comporte Cl, Br, I, SCN et/ou N₃.

9. Procédé selon la revendication 8, **caractérisé en ce que** l'amorceur peut être mono- bi- ou plurivalent eu égard aux groupes actifs.

10. Procédé selon l'une quelconque des revendications précédentes, **caractérisé en ce que** le polymère peut être obtenu par polymérisation d'acrylates d'alkyle, de méthacrylates d'alkyle, de styrènes, d'esters vinyliques, d'éthers vinyliques, de fumarates, de maléates, d'itaconates, d'acrylonitriles et/ou d'autres monomères polymérisables par ATRP et/ou de mélanges d'acrylates d'alkyle, de méthacrylates d'alkyle, d'esters vinyliques, d'éthers vinyliques, de fumarates, de maléates, d'itaconates, de styrène d'acrylonitriles et/ou d'autres monomères polymérisables par ATRP.

11. Procédé selon l'une quelconque des revendications 1 à 4, **caractérisé en ce que** le polymère présente une masse moléculaire moyenne en nombre comprise entre 5 000 g/mole et 120 000 g/mole.

12. Procédé selon l'une quelconque des revendications précédentes, **caractérisé en ce que** le polymère présente une distribution de masse moléculaire inférieure à 1,8, de préférence inférieure à 1,4.

13. Procédé selon l'une quelconque des revendications précédentes, **caractérisé en ce qu'**après l'élimination du composé contenant un métal de transition le polymère ne présente pas de changements eu égard aux propriétés du polymère degré de fonctionnalisation, température de transition vitreuse, structure, masse moléculaire, ramification et/ou distribution de masse moléculaire.

14. Procédé selon l'une quelconque des revendications précédentes, **caractérisé en ce que** la précipitation et la filtration subséquente sont effectuées à une température dans la plage comprise entre 0 °C et 120 °C.

15. Procédé selon l'une quelconque des revendications précédentes, **caractérisé en ce qu'**en raison de la précipitation et de la filtration subséquente la teneur en métal de la solution de polymère diminue d'au moins 80 % en poids, de préférence d'au moins 95 % en poids.

16. Procédé selon l'une quelconque des revendications précédentes, **caractérisé en ce que** pour la réduction du composé soufré ajouté et/ou des ligands ajoutés on utilise un adsorbant ou un mélange d'adsorbants.

17. Procédé selon la revendication 16, **caractérisé en ce que** l'adsorbant ou le mélange d'adsorbants consiste en silice et/ou en oxyde d'aluminium ou en un polyacide organique ou en charbon actif.

18. Procédé selon la revendication 17, **caractérisé en ce que** dans la filtration le charbon actif est utilisé sous forme d'un filtre à charbon actif.
